# EUROPÄISCHE PATENTANMELDUNG

(11) **EP 3 428 052 A1**
(43) Veröffentlichungstag der Anmeldung: **16.01.2019**
(21) Anmeldenummer: 18181648.9
(22) Anmeldetag: 04.07.2018
(51) Int. Cl.: B62M 6/90, B62K 19/34, B62K 19/40, B62J 99/00

(54) **FAHRRADRAHMEN FÜR ELEKTROFAHRRÄDER UND ELEKTROFAHRRAD HIERMIT**

(30) Priorität: 14.07.2017 DE 202017104229 U
(71) Anmelder: ZEG Zweirad-Einkaufs-Genossenschaft eG, 50739 Köln (DE)
(72) Erfinder: Gehring, Hendrik, 51429 Bergisch Gladbach (DE)
(74) Vertreter: Hennicke, Ernst Rüdiger

(57) **Zusammenfassung**

Die Erfindung betrifft einen Fahrradrahmen für Elektrofahrräder. Der Fahrradrahmen weist mehrere Rahmenstreben auf, die zumindest ein Unterrohr (2), ein Sattelrohr (3) und ein Lenkkopfrohr (19) des Fahrradrahmens bilden, er ist mit einem von Sitzstreben (7), Kettenstreben (6) und Ausfallenden (8) für die Hinterachse (9) gebildeten Hinterbau (5) sowie mit einer Halteeinrichtung (4) für einen Elektromotor, mit wenigstens einer Batterieaufnahme (18) zur Anordnung einer Energieversorgungseinheit (12) für den Elektromotor am Fahrradrahmen versehen. Ferner ist der Fahrradrahmen mit einem Ladeanschluss (30) zum Laden der in der Batterieaufnahme montierten Energieversorgungseinheit (12) versehen. Damit der Benutzer des Elektrofahrrades komfortabel die elektrische Aufladung der Energieversorgungseinheit über die Ladebuchse vornehmen kann; ist erfindungsgemäß vorgesehen, dass der Ladeanschluss (30) am Hinterbau (5) positioniert ist.

## Beschreibung

Die Erfindung betrifft einen Fahrradrahmen für Elektrofahrräder, mit mehreren Rahmenstreben, die zumindest ein Unterrohr, ein Sattelrohr und ein Lenkkopfrohr des Fahrradrahmens bilden, mit einem von Sitzstreben, Kettenstreben und Ausfallenden für die Hinterachse gebildeten Hinterbau, mit einer Halteeinrichtung für einen Elektromotor, mit wenigstens einer Batterieaufnahme zur lösbaren Anordnung einer Energieversorgungseinheit für den Elektromotor am Fahrradrahmen, und mit einem Ladeanschluss zum Laden der in der Batterieaufnahme montierten Energieversorgungseinheit.

Bei einem Elektrofahrrad müssen zusätzlich zu den auch bei einem nicht motorisierten Fahrrad benötigten Fahrradkomponenten mindestens ein Elektromotor, eine wiederaufladbare Energieversorgungseinheit sowie eine im Regelfall ein Display aufweisende elektronische Steuereinheit am Fahrradrahmen befestigt oder untergebracht werden. Gleichzeitig muss sichergestellt sein, dass die Energieversorgungseinheit geladen werden kann. Während es anfänglich üblich war, die Energieversorgungseinheit zum Aufladen aus dem Fahrradrahmen des Elektrofahrers auszubauen, wird zur Steigerung des Bedienungskomforts bei neueren Elektrofahrrädern ein Ladeanschluss in Form einer Ladebuchse vorgesehen, die mit einer externen Ladestation verbunden werden kann und eine elektrische Aufladung der Energieversorgungseinheit beispielsweise auch an öffentlichen Ladestationen ermöglicht.

Die DE 10 2013 204 458 A1 offenbart einen Fahrradrahmen mit im Unterrohr integrierter Energieversorgungseinheit und einem benachbart hierzu an einer Seitenwand des Unterrohrs angeordneten, mit einer Abdeckung verschließbaren Ladebuchse als Ladeanschluss. Der Ladeanschluss ist am Unterrohr etwa mittig zwischen Elektromotor und Lenkkopfrohr positioniert. Damit die aus Kunststoff bestehende Abdeckung die Ladebuchse während der Fahrt vor Umgebungseinflüssen sicher schützt und während des Ladevorgangs nicht verloren geht, ist sie mit Magneten versehen, welche in der Schließstellung mit magnetisierten Vorsprüngen am Boden der Ladebuchse zusammenwirken, und in einer Aufbewahrungsstellung mit einem Magneten zusammenwirken, der am seitlichen Gehäuse der Ladebuchse positioniert ist und im Innern des Unterrohrs angeordnet ist. Da die Ladebuchse nahe der Energieversorgungseinheit angeordnet ist, kann ein elektrisches Verbindungskabel intern im Unterrohr verlegt werden.

Die Kabelführung für die elektrischen Verbindungskabel zum Ladeanschluss, gegebenenfalls auch für Versorgungskabel für Frontlicht oder Rücklicht, erfolgt in der die Energieversorgungseinheit integral aufnehmenden Rahmenstrebe intern, tritt dann aber an deren Ende über einen Austritt aus und geht offen verlegt zum Display oder zum Licht (vergleiche Z.B 10 2013 204 557). Der Ladeanschluss befindet sich an der Seitenwand des Unterrohrs nahe des Lenkkopfrohrs, so das nur ein kurzer Kabelweg innerhalb des Unterrohrs benötigt wird, um den Ladeanschluss mit der Energieversorgungseinheit bzw. deren rahmenseitige Koppelbuchse elektrisch leitend zu verbinden.

Aufgabe der Erfindung ist es, ausgehend von diesem Stand der Technik einen Fahrradrahmen für Elektrofahrräder zu schaffen, der montage- und bedienerfreundlich konstruiert ist und bei welchem der Benutzer besonders komfortabel die elektrische Aufladung der Energieversorgungseinheit über die Ladebuchse vornehmen kann.

Zur Lösung dieser Aufgabe wird mit der Erfindung vorgeschlagen, dass der Ladeanschluss am Hinterbau positioniert ist, wobei insbesondere bevorzugt ist, dass der Ladeanschluss rückseitig des Sattelrohrs von oben zugänglich und schräg ausgerichtet am Hinterbau zwischen Sattelrohr und Sitzstreben angeordnet ist. Die Positionierung des Ladeanschluss mit der Ladebuchse am Hinterbau ermöglicht, dass der Benutzer des Fahrrades den Ladeanschluss bequem von oben erreichen kann und ihn, ohne sich bücken zu müssen, öffnen kann und dann den Ladestecker beispielsweise einer externen Ladestation, wie sie mittlerweile auch an Restaurants, Lebensmittelläden oder dergleichen vorgefunden werden können, einschieben kann und hierbei die Ladebuchse im Ladeanschluss im Blick hat. Die Position am Hinterbau im Bereich des Zwickels von Sattelrohr und Sitzstreben ist gut gegen Spritzwasser geschützt und der Sattel sowie die Sattelstütze zusammen mit dem Sattelrohr sorgen auch für einen guten Schutz vor Regen während der Fahrt, wobei sichergestellt ist, dass sich ansammelndes Wasser aufgrund der schrägen Ausrichtung des Hinterbaus gut ablaufen kann.

In an sich bekannter Weise weist der Ladeanschluss vorzugsweise eine Ladebuchse für die Energieversorgungseinheit auf, die über Elektrokabel mit einer Kontaktbuchse für die Energieversorgungseinheit elektrisch verbunden ist.

Besonders vorteilhaft ist, wenn der Ladeanschluss, insbesondere eine Ladebuchse, an einem einstückig ausgebildeten Halteteil angeordnet ist, wobei das Halteteil an einem Ende zwei Anschlussstellen für Sitzstreben und an seinem anderen Ende einen Anschlussabschnitt für den Anschluss an das Sattelrohr aufweist. Zweckmäßigerweise wird der Anschlussabschnitt durch Materialabtrag individuell an die gegebene Geometrien des Sattelrohrs angepasst, da dies eine modulare Nutzung eines einzigen Halteteils für unterschiedliche Rahmengeometrien des Fahrradrahmens sowie Sattelrohrquerschnitte ermöglicht. Am Fahrradrahmen ist mithin der Anschlussabschnitt vorzugsweise durch Materialabtrag individuell an die gegebene Geometrien des Sattelrohrs angepasst. Bei dem Halteteil handelt es sich vorzugsweise um ein Gussteil oder Schmiedeteil mit einem verschließbaren Hohlraum für die Ladebuchse, was eine gut geschützte Unterbringung der Ladebuchse und zugleich eine steife und montagefreundliche Anbindung des Hinterbaus an die Sattelstütze ermöglicht.

Gemäß einer besonders vorteilhaften Ausgestaltung ist das Halteteil zwischen den Anschlussstellen mit einer bogenförmigen Stirnwand versehen, die eine Anlagefläche für ein Schutzblech bildet und vorzugsweise mit einem Durchgangsloch zur Befestigung eines Schutzblech versehen ist.

Gemäß einer alternativen Ausgestaltung eines Fahrradrahmens kann der Ladeanschluss, insbesondere eine Ladebuchse, zwischen den Sitzstreben an einem Halteblech montiert sein, das sich an den beiden Sitzstreben abstützt, wobei die Sitzstreben unmittelbar am Sattelrohr, verankert, insbesondere festgeschweißt sind.

Da bei der erfindungsgemäßen Anordnung des Ladeanschluss am Hinterbau eine Verkabelung zwischen der Koppelbuchse für die Energieversorgungseinheit und der Ladebuchse des Ladeanschluss vorgesehen werden muss, die mindestens eine sich zwischen der die Energieversorgungseinheit aufweisenden Rahmenstrebe und dem Hinterbau befindliche Rahmenstrebe überbrückt, kann gemäß einer besonders vorteilhaften Ausgestaltung das Sattelrohr, welches einen Außenumfang und innerhalb des Außenumfangs eine Einschiebeöffnung für eine Sattelstütze hat, eine am Außenumfang geschlossene, interne Kammer als Kabelführungskanal für wenigstens ein Elektrokabel aufweisen, wobei der Kabelführungskanal mit einem sich entlang des Einschubraums für die Sattelstütze erstreckenden offenen Durchgang zur Einschiebeöffnung für die Sattelstütze versehen sein. Diese Ausgestaltung ermöglicht mithin die interne, von außen nicht sichtbare, geschützte Verlegung des Anschlusskabels bzw. Elektrokabel, mit welchem die Ladebuchse des Ladeanschluss mit der Energieversorgungseinheit unter Zwischenschaltung lösbarer Koppelstecker verbunden wird, im Sattelrohr, wobei auch ein mit Stecker versehenes Elektrokabel aufgrund des offenen Durchgangs zwischen Einschiebeöffnung und Kabelkanal verlegt werden kann. Nach Verlegung des Elektrokabel ist dann das mit einer Ladebuchse im Ladeanschluss verbundene Elektrokabel im Kabelführungskanal des Sattelrohr entlanggeführt, und tritt bei der insbesondere bevorzugten Ausgestaltung am unteren Ende des Sattelrohrs aus dem Kabelführungskanal aus. Vorzugsweise ist das Sattelrohr derart ausgebildet, dass der Durchgang mittels eines oder mehrerer Schließelemente, insbesondere Schienen oder Schienenstücken, geschlossen werden kann, wozu vorzugsweise die Schließelemente vom oberen Ende des Sattelrohrs her in entsprechende Führungen im Sattelrohr zwischen Kammer und Einschiebeöffnung eingeschoben werden können.

Die Halteeinrichtung für den Elektromotor kann insbesondere auch eine Motorstützplatte umfassen, an der das Sattelrohr und das Unterrohr verankert, insbesondere angeschweißt, sind, wobei das Verbindungskabel unterhalb der Motorstützplatte entlang zum Innenraum des Unterrohrs geführt ist. Das Sattelrohr kann hierzu insbesondere aus einem Profil, insbesondere Stranggussprofil, mit eiförmigem Außenumfang bestehen, welcher einen in Fahrtrichtung weisenden halbkreisförmigen Frontabschnitt und einen rückseitigen parabelförmigen Hinterabschnitt aufweist, wobei die den Kabelführungskanal bildende Kammer im rückseitigen Abschnitt ausgebildet ist. Am Halteteil für den Ladeanschluss sind vorzugsweise Einschraublöcher für eine Bodenplatte ausgebildet.

Gemäß einer alternativen Ausgestaltung eines erfindungsgemäßen Fahrradrahmens kann das mit einer Ladebuchse im Ladeanschluss verbundene Elektrokabel an einer Unterseite des Schutzblech für ein Hinterrad entlang verlegt sein.

Die Erfindung betrifft ferner auch ein Elektrofahrrad mit einem Fahrradrahmen mit mehreren Rahmenstreben, mit einem von Sitzstreben, Kettenstreben und Ausfallenden für die Hinterachse gebildeten Hinterbau, mit einer Halteeinrichtung für einen Elektromotor, mit wenigstens einer Batterieaufnahme zur vorzugsweise lösbaren Anordnung einer Energieversorgungseinheit für den Elektromotor am Fahrradrahmen, und mit einem Ladeanschluss zum Laden der in der Batterieaufnahme montierten Energieversorgungseinheit, wobei das Elektrofahrrad erfindungsgemäß dadurch gekennzeichnet ist, dass der Fahrradrahmen wie oben beschrieben ausgebildet ist und einen am Hinterbau positionierten, für den Benutzer im Stehen von oben zugänglichen Ladeanschluss aufweist.

Weitere Vorteile und Ausgestaltungen eines erfindungsgemäßen Fahrradrahmens sowie eines Elektrofahrrades hiermit ergeben sich aus der nachfolgenden Beschreibung von in der Zeichnung schematisch gezeigten Ausführungsbeispielen. In der Zeichnung zeigen:
- **Fig. 1**: in perspektivischer Ansicht einen erfindungsgemäßen Fahrradrahmen gemäß einem ersten Ausführungsbeispiel;
- **Fig. 2**: den Fahrradrahmen aus Figur 1 in Seitenansicht, aber ohne Elektromotor, Sattelklemme und Vorbau;
- **Fig. 3**: eine Detailansicht des Ladeanschluss am Hinterbau im Zwickel zwischen Sattelrohr, Sitzstreben und Schutzblech;
- **Fig. 4**: eine Detailansicht eines Fahrradrahmens in Seitenansicht, teilweise aufgebrochen und mit einer möglichen Verlegung der Verkabelung entlang des Schutzblechs;
- **Fig. 5**: ein Halteteil zur Aufnahme des Ladeanschluss in Draufsicht;
- **Fig. 6**: das Halteteil aus Figur 5 in perspektivischer Ansicht von schräg oben;
- **Fig. 7**: das Halteteil aus Figur 5 in perspektivischer Ansicht auf die Unterseite bei abgenommener Bodenplatte;
- **Fig. 8**: einen Schnitt durch Ladebuchse, Halteteil und Sattelrohr mit internem Kabelführungskanal; und
- **Fig. 9**: schematisch stark vereinfacht den Aufbau eines Sattelrohrs mit internem Kabelführungskanal.

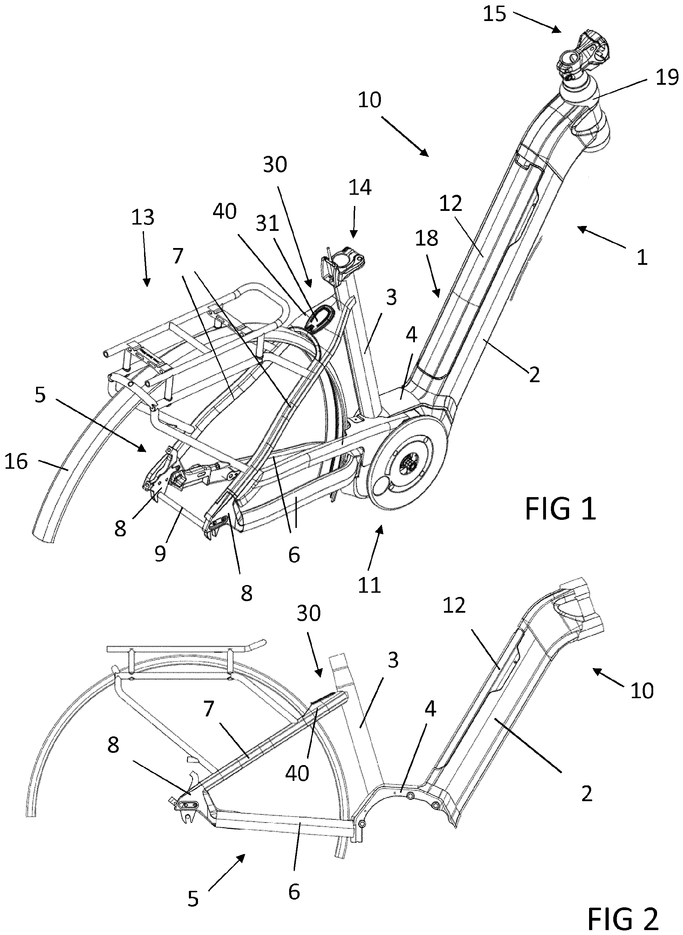

In den Figuren 1 und 2 ist insgesamt mit Bezugszeichen 10 ein erfindungsgemäßer Fahrradrahmen für ein Tiefeinsteiger-Modell eines Elektrofahrrades 1 bezeichnet, wobei der Fahrradrahmen 10 für das Tiefeinsteiger-Modell als wesentliche Bestandteile ein Unterrohr 2 und ein Sattelrohr 3 aufweist, die jeweils beabstandet voneinander an einer Motorstützplatte 4 starr befestigt sind, und ferner einen Hinterbau 5 aufweist, der jeweils paarweise Kettenstreben 6, Sitzstreben 7 und Ausfallenden 8 zur Lagerung eines nicht dargestellten Hinterrades über die angedeutete Hinterradachse 9 am starren Hinterbau 5 aufweist. Da es sich um einen Fahrradrahmen 10 für ein Elektrofahrrad 1 handelt, ist in Figur 1 ferner noch der an der Motorstützplatte 4 hängend befestigte Elektromotor 11 gezeigt, über den der Benutzer des Elektrofahrrades 1 beim Pedalieren eine Trittkraftunterstützung erhält. Der Elektromotor 11 wird mittels einer aufladbaren Energieversorgungseinheit 12 mit elektrischer Energie versorgt, wobei beim Fahrradrahmen 10 die Energieversorgungseinheit 12 in eine Batterieaufnahme 18 integriert eingesetzt ist, die an der Oberseite des Unterrohrs 2 ausgebildet ist. Das Unterrohr 2 mit seinem etwa rechteckförmigen Querschnitt ist entsprechend dimensioniert, dass die Energieversorgungseinheit 12 vollständig in die Aufnahme 18 eingesetzt werden kann, ohne dass Teile der Energieversorgungseinheit 12 über die Abmessungen des Unterrohrs 2 hinausragen.

Die Figur 1 zeigt ferner noch einen am Hinterbau 5 abgestützten Gepäckträger 13, ein Hinterrad-Schutzblech 16, eine Sattelklemme 14 sowie einen Vorbau 15, über welchen ein Lenker (nicht dargestellt) mit einem Gabelschaft einer ebenfalls nicht dargestellten Vorderradgabel verbunden werden kann, über die dann wiederum ein Vorderrad abgestützt wird, um das Fahrrad weitestgehend zu komplettieren. Der Gabelschaft der Vorderradgabel wird, wie dies dem Fachmann bekannt ist, im Lenkkopfrohr 19 drehbar abgestützt, welches starr mit dem oberen Ende des Unterrohrs 2 verbunden ist.

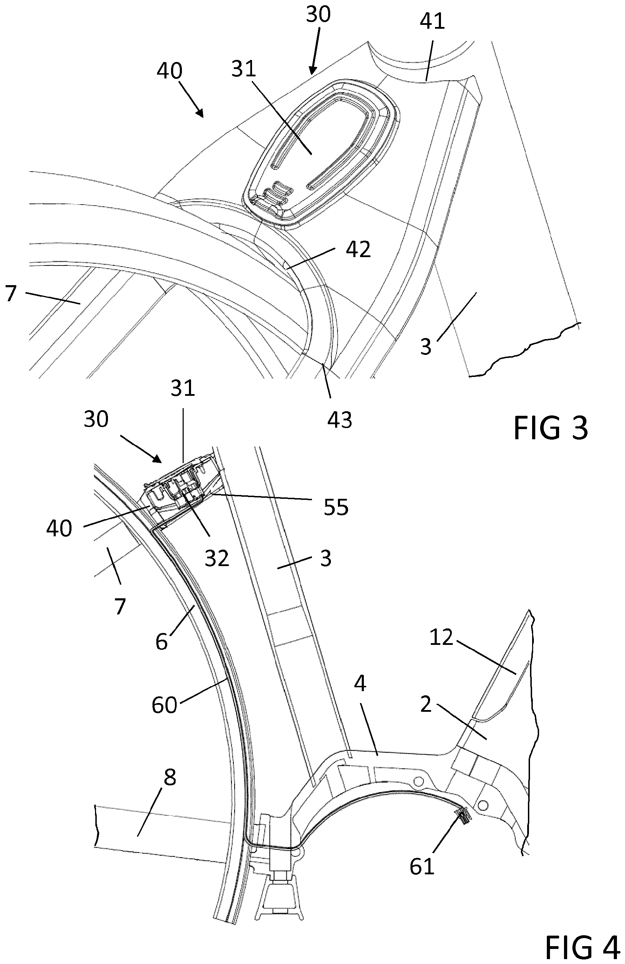

Am Fahrradrahmen 10 ist ein Ladeanschluss 30 vorhanden, von dem in Figur 1 die zugehörige Abdeckung 31 als Schutz vor Umwelteinflüssen wie insbesondere Spritzwasser und Regenwasser zu erkennen ist, unterhalb der eine Ladebuchse (32, vergleiche Figur 4) geschützt angeordnet ist, um die Energieversorgungseinheit 12 in Betriebsstellung, also im Einbauzustand am Fahrradrahmen 10, an externen Ladestationen aufladen zu können. Gemäß der Erfindung befindet sich der Ladeanschluss am Hinterbau 5, und zwar in einer Position am Hinterbau 5 unmittelbar hinter dem Sattelrohr 3 im Zwickel zwischen Sattelrohr 3, Schutzblech 6 und den beiden Sitzstreben 7. Der Ladeanschluss befindet sich mithin quasi an der höchsten Stelle des Hinterbaus 5 und ist von oben durch den Freiraum zwischen Sattel (nicht dargestellt) und optionalem Gepäckträger 13, wie dargestellt, bequem zugänglich. Die Abdeckung 31 steht, genauso wie die Ladebuchse (32, Figur 4) schräg zur Horizontalen in einem ähnlichen Winkel wie die beiden Sitzstreben 7.

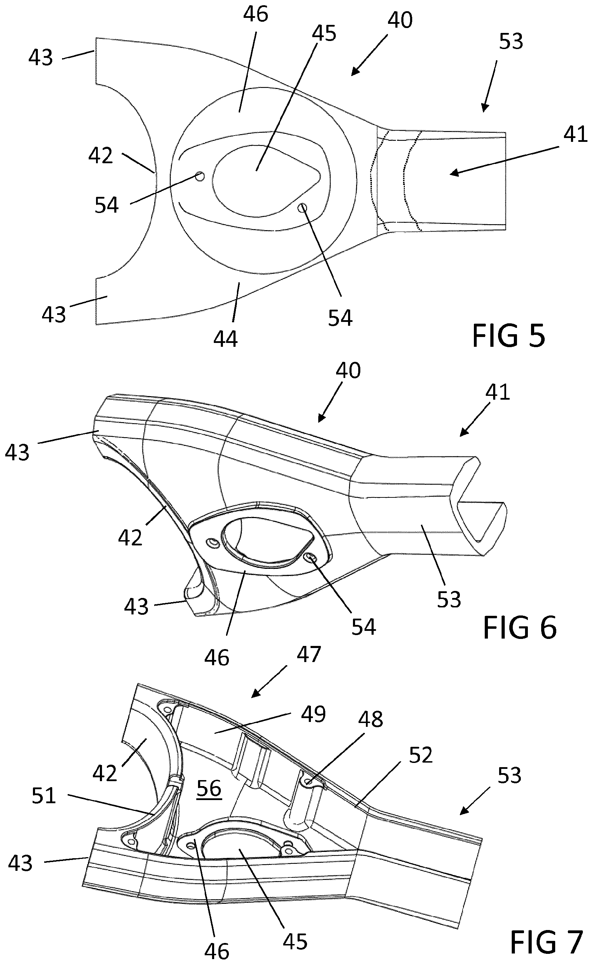

Es wäre zwar möglich, den Ladeanschluss an einem Blech vorzusehen, welches mittels der oberen Abschnitte der Sitzstreben abgestützt wird, die Figuren 1 bis 7 zeigen jedoch die bevorzugte Ausgestaltung, bei welcher der Ladeanschluss 30 an einem gesondert gefertigten Halteteil 40 , insbesondere einem Schmiedeteil oder Gussteil, ausgebildet ist, welches mit seinem oberen Ende 41 an der Hinterseite des Sattelrohr 3 angeschweißt ist und welches an seinem unteren Ende zum einen eine gewölbte Anlagefläche 42 für das Schutzblech 16 und zum anderen zwei Anschlussstellen 43 für die beiden Sitzstreben 7 aufweist. Die Figuren 5 bis 7 zeigen ein als Schmiedeteil oder Gussteil hergestelltes Ausgangsteil für das Halteteil 40; die gewölbte Anlagefläche 42 und die beiden Enden 43 mit einem an den Querschnitt der Sitzstreben angepassten Querschnitt sind derart ausgebildet, dass in diesem Bereich möglichst keine Nacharbeit erforderlich ist. Das Halteteil verjüngt sich vom unteren Ende mit der gewölbten Anlagefläche zum oberen Ende 41 hin, wobei in dem sich verjüngenden Mittelabschnitt 44 ein abgeflachter Montageabschnitt 46 mit einem Durchgriffsloch 45 geschaffen ist, um die Ladebuchse (32, Figur 4) an der Unterseite des Montageabschnitts 46, und hierbei in einem Hohlraum 56 im Innern des Halteteils 40, befestigen zu können. Durch das Durchgriffloch 45 hindurch kann dann ein Ladestecker in die darunter befindliche eigentliche Einsteckbuchse der Ladebuchse 32 eingesteckt werden. Nachdem die Ladebuchse montiert wurde und eine Verkabelung, wie noch erläutert wird, an die Ladebuchse angeschlossen wurde, kann der Hohlraum 56 an der offenen Unterseite 47 des Halteteils 40 verschlossen werden, indem eine passgenau an die Form des Halteteils 40 angepasste Bodenplatte (55, Figur 4) an der Unterseite 47 angelegt wird und Schrauben in die vorhandenen Schraublöcher 48 eingeschraubt werden. Die Unterseite 47 ist hierbei an den Seitenwänden 49 und an der die gewölbte Anlagefläche 42 bildenden Stirnwand 51 mit einer umlaufenden Stufe 52 als Dichtkante versehen, und die Bodenplatte steht um das Maß der Stufe über den Querschnitt des Hohlraums 56 über.

Die Anpassung des in den Figuren 5 bis 7 gezeigten Ausgangsteils für das Halteteil 40 an unterschiedliche Rahmengeometrie erfolgt über den im Querschnitt annähernd u-förmigen Anpassungsabschnitt 53 am im Einbauzustand oberen Ende 41 des Halteteils 40. Wie mit den gestrichelten Linien in Figur 5 angedeutet, dient der Anpassungsabschnitt 53 dazu, das obere Ende 41 an die Formgebung des Sattelrohrs anzupassen und auch unterschiedliche Winkel des Hinterbaus relativ zur Horizontalen aufgrund unterschiedlicher Rahmengrößen ausgleichen zu können, sodass mit demselben Ausgangsteil möglichst bei allen Rahmengrößen einer gleich aufgebauten Rahmenserie der Ladeanschluss am Hinterbau vorgesehen werden kann und baugleiche Abdeckungen und baugleiche Ladebuchsen verwendet werden können. Zum Arretieren der Ladebuchse sind am abgeflachten Montageabschnitt 46 hier zwei Schraublöcher 54 für Befestigungsschrauben vorgesehen, die in Einschraublöchern an der Ladebuchse im Montagezustand einfassen.

Die Figur 4 zeigt, schematisch vereinfacht, einen Schnitt durch den Ladeanschluss 30, sodass die im Innern des Halteteils 40 angeordnete Ladebuchse 32 unterhalb der Abdeckung 31 sowie auch die Bodenplatte 55 zu erkennen sind. Der Aufbau der Ladebuchse 32 wird meist von den Herstellern der Energieversorgungseinheit vorgegeben und ist vorzugsweise vereinheitlicht, sodass für alle Elektrofahrräder derselbe Ladestecker verwendet werden kann; für die Erfindung kommt es ohnehin auf den Aufbau der Ladebuchse 32 nicht an. Die Schnittansicht in Figur 4 zeigt allerdings eine Variante, wie die Verkabelung der Ladebuchse 32 mit der Energieversorgungseinheit 12 im Unterrohr 2 erfolgen könnte, nämlich über ein Elektrokabel 60, welches anfänglich innerhalb des Hohlraums 56 des Halteteils 40 in Richtung des Schutzblech 6 geführt wird, dort durch das Schutzblech 6 hindurchtritt und dann an der Unterseite des Schutzblech 6 entlang bis zu den Kettenstreben 8 geführt wird, wo es über einen Durchbruch in der Motorstützplatte 4 hindurch zur Unterseite der Motorstützplatte 4 geführt wird. Der Stecker 61 am freien Kabelende des Elektrokabel 60 kann dann direkt mit der Koppelbuchse für die Energieversorgungseinheit 12 verbunden werden, oder über ein Zwischenkabel an diese angesteckt werden.

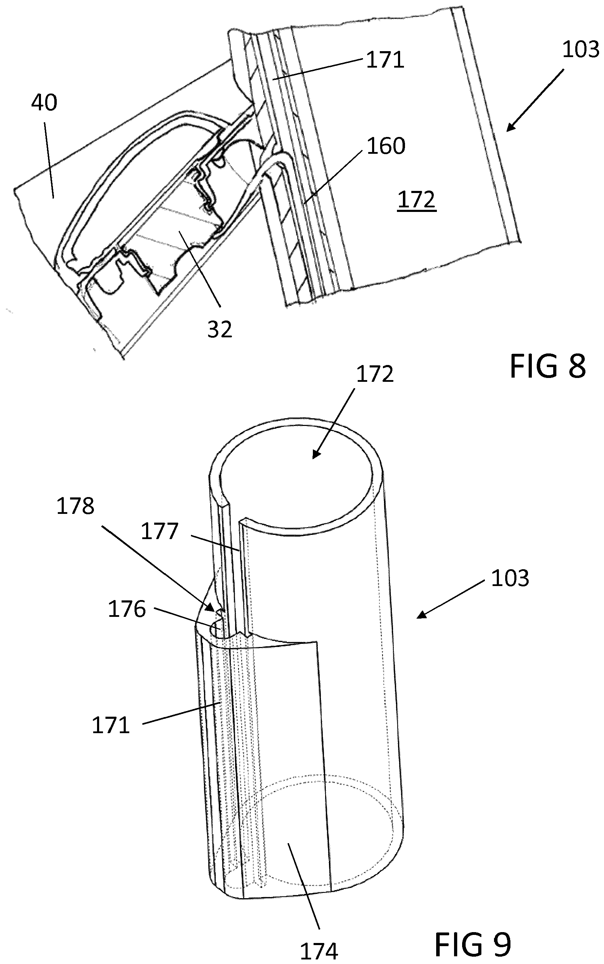

Die Figuren 8 und 9 zeigen eine besonders vorteilhafte Ausgestaltung, bei der die Verkabelung für die Elektrobuchse 32, die wie beim vorherigen Ausführungsbeispiel im Hohlraum eines Halteteils 40 angeordnet ist, welches Halteteil 40 sich in der Anschlussstelle zwischen den Sitzstreben (nicht gezeigt) des Hinterbaus und der Rückseite des Sattelrohr 103 befindet, in einem Kabelführungskanal 171 im Innern des Sattelrohrs 103 verlegt ist. Das Sattelrohr 103 hat in an sich bekannter Weise eine Einschiebeöffnung 172 für eine mit einem Sattel verbundene Sattelstütze, aber das Sattelrohr 103 hat einen von einem Rundrohr abweichenden Querschnitt aufgrund einer Ausbuchtung 174 im rückwärtigen Bereich der Sattelstütze 103. Die Ausbuchtung 174 bildet vorzugsweise einen integralen Bestandteil des Sattelrohrs 103, wozu dieses vorzugsweise von einem Doppelkammerrohr gebildet wird, welches einen geschlossenen Außenumfang hat, der in Fahrtrichtung ein halbkreisförmiges Profil und an der Hinterseite ein parabelförmiges Profil hat. Die deutlich größere Kammer des Doppelkammerrohrs, die hinter dem halbkreisförmigen Profil und partiell innerhalb des parabelförmigen Profils liegt, hat innen einen kreisrunden Querschnitt und bildet die Einschiebeöffnung 172 für die Sattelstütze, wohingegen die für den eiförmigen Querschnitt der Außenform des Sattelrohrs 103 sorgende Ausbuchtung 174 mit einer deutlich kleineren Kammer 176 versehen ist, die sich über die gesamte Höhe des Sattelrohrs 103 parallel zur Einschiebeöffnung 172 erstreckt und als Kabelführungskanal 171 zum Verlegen eines oder mehrerer Elektrokabel dient. Zwischen der Einschiebeöffnung 172 und der den Kabelführungskanal 171 bildenden Kammer 176 ist über die gesamte Höhe des Sattelrohrs 103 ein Durchbruch 177 ausgebildet, über welchen das oder die Elektrokabel bei demontierter Sattelstütze montagefreundlich in die Kammer 176 eingelegt werden können, und zwar selbst dann, wenn sie mit einem Stecker versehen sind, dessen Abmessungen größer sind als die Abmessungen der Kammer 176, aber kleiner als die der Einschiebeöffnung 172. Die Kammer 176 im Sattelrohr 103 ermöglicht nicht nur die interne Verlegung des Versorgungskabels 160 für die Ladebuchse 32, sondern auch die Verlegung eines Elektrokabels für beispielsweise ein Rücklicht oder Bremslicht, welches am Gepäckträger oder an der Sattelklemme befestigt werden kann. Zwischen der Kammer 176 und der Einschiebeöffnung 172 kann vorteilhafterweise noch ein Schließelement wie eine Schiene eingeschoben werden, wozu die Kammer 176 an ihren Begrenzungswänden Schlitzeinziehungen 178 aufweist, in die vom oberen Ende des Sattelrohr 103 her eine entsprechende Schiene eingeschoben werden kann. Am oberen Ende kann die Ausbuchtung 174, wie Figur 9 schematisch verdeutlicht, abgedreht sein, um dort eine Sattelklemme zu montieren, mit der eine Sattelstütze in der Einschiebeöffnung 172 des Sattelrohrs 103 festgeklemmt wird.

Für den Fachmann ergeben sich aus der vorhergehenden Beschreibung zahlreiche Modifikationen, die in den Schutzbereich der anhängenden Ansprüche fallen sollen. Es versteht sich, dass ein Ladeanschluss am Hinterbau auch bei Fahrradrahmen ohne Tiefeinstieg, insbesondere auch bei Trapezrahmen oder Diamantrahmen vorgesehen werden kann. Die gezeigte Abdeckung und deren Geometrie, genauso wie die Querschnitte der dargestellten Sattelstreben und Sitzstreben, bilden nur ein mögliches Ausführungsbeispiel, ohne den Schutzbereich hierauf zu begrenzen. Es ist für die Erfindung auch unerheblich, ob die Energieversorgungseinheit in eine Rahmenstrebe integriert wird oder auf andere Weise am Rahmen befestigt wird, beispielsweise außen an einer der Rahmenstreben befestigt wird. Da ein Ladeanschluss vorgesehen ist, ist es noch nicht einmal notwendig, dass die Energieversorgungseinheit demontierbar ist. Sie kann daher auch vollständig innerhalb einer der Rahmenstreben angeordnet sein. Wenn die Energieversorgungseinheit nicht zur regelmäßigen Entnahme ausgebildet ist, kann der Ladeanschluss über das Elektrokabel direkt mit der Energieversorgungseinheit verbunden werden.

## Patentansprüche

1. Fahrradrahmen für Elektrofahrräder, mit mehreren Rahmenstreben, die zumindest ein Unterrohr (2), ein Sattelrohr (3) und ein Lenkkopfrohr (19) des Fahrradrahmens bilden, mit einem von Sitzstreben (7), Kettenstreben (6) und Ausfallenden (8) für die Hinterachse (9) gebildeten Hinterbau (5), mit einer Halteeinrichtung (4) für einen Elektromotor, mit wenigstens einer Batterieaufnahme (18) zur Anordnung einer Energieversorgungseinheit (12) für den Elektromotor am Fahrradrahmen, und mit einem Ladeanschluss (30) zum Laden der in der Batterieaufnahme montierten Energieversorgungseinheit (12), **dadurch gekennzeichnet, dass** der Ladeanschluss (30) am Hinterbau (5) positioniert ist.

2. Fahrradrahmen nach Anspruch 1, **dadurch gekennzeichnet, dass** der Ladeanschluss (30) rückseitig des Sattelrohrs (3) von oben zugänglich am Hinterbau (5) zwischen Sattelrohr (3) und Sitzstreben (7) angeordnet ist, und vorzugsweise schräg zur Horizontalen ausgerichtet ist.

3. Fahrradrahmen nach Anspruch 1 oder 2, **dadurch gekennzeichnet, dass** der Ladeanschluss (30) eine Ladebuchse (32) für die Energieversorgungseinheit (12) aufweist, die über Elektrokabel mit der Energieversorgungseinheit oder einer Kontaktbuchse für die Energieversorgungseinheit elektrisch verbunden ist.

4. Fahrradrahmen nach einem der Ansprüche 1 bis 3, **dadurch gekennzeichnet, dass** der Ladeanschluss (30), insbesondere eine Ladebuchse, an einem einstückig ausgebildeten Halteteil (40), insbesondere in einem Hohlraum (56) des Halteteils angeordnet ist, wobei das Halteteil (40) an einem Ende zwei Anschlussstellen (43) für Sitzstreben (7) und an seinem anderen Ende einen Anschlussabschnitt (57) für den Anschluss an das Sattelrohr aufweist.

5. Fahrradrahmen nach Anspruch 4, **dadurch gekennzeichnet dass** der Anschlussabschnitt (57) durch Materialabtrag an einem Anpassungsabschnitt (53) individuell an die gegebene Geometrien des Sattelrohrs angepasst ist.

6. Fahrradrahmen nach Anspruch 4 oder 5, **dadurch gekennzeichnet dass** das Halteteil (40) zwischen den Anschlussstellen (43) mit einer bogenförmigen Stirnwand (51) versehen ist, die eine Anlagefläche für ein Schutzblech (6) bildet und vorzugsweise mit einem Durchgangsloch zur Befestigung eines Schutzblech (6) versehen ist.

7. Fahrradrahmen nach einem der Ansprüche 1 bis 3, **dadurch gekennzeichnet, dass** der Ladeanschluss, insbesondere eine Ladebuchse, zwischen den Sitzstreben an einem Halteblech montiert ist, das sich an den beiden Sitzstreben abstützt, wobei die Sitzstreben unmittelbar am Sattelrohr verankert, insbesondere festgeschweißt oder angelötet sind.

8. Fahrradrahmen nach einem der vorhergehenden Ansprüche, **dadurch gekennzeichnet, dass** das Sattelrohr einen Außenumfang und innerhalb des Außenumfangs eine Einschiebeöffnung (172) für eine Sattelstütze aufweist, und dass das Sattelrohr eine am Außenumfang geschlossene Kammer (176) als Kabelführungskanal (171) für wenigstens ein Elektrokabel aufweist, wobei der Kabelführungskanal mit einem sich entlang der Einschiebeöffnung (172) für die Sattelstütze erstreckenden offenen Durchgang (177) zur Einschiebeöffnung (172) versehen ist.

9. Fahrradrahmen nach Anspruch 8, **dadurch gekennzeichnet dass** das mit einer Ladebuchse (82) im Ladeanschluss verbundene Elektrokabel (160) im Kabelführungskanal (171) des Sattelrohr entlanggeführt ist und am unteren Ende des Sattelrohr aus dem Kabelführungskanal austritt.

10. Fahrradrahmen nach einem der vorhergehenden Ansprüche, insbesondere nach Anspruch 8 oder 9, **dadurch gekennzeichnet dass** die Halteeinrichtung für den Elektromotor eine Motorstützplatte (4) umfasst, an der das Sattelrohr (3) und das Unterrohr (2) verankert, insbesondere angeschweißt, sind, wobei das Elektrokabel unterhalb der Motorstützplatte (4) entlang zum Innenraum des Unterrohrs (2) geführt ist.

11. Fahrradrahmen nach Anspruch 8 oder 9, **dadurch gekennzeichnet dass** das Sattelrohr (100) aus einem Profil, insbesondere Stranggussprofil, mit eiförmigem Außenumfang besteht, welcher einen in Fahrtrichtung weisenden halbkreisförmigen Frontabschnitt und einen rückseitigen parabelförmigen Hinterabschnitt aufweist, wobei die den Kabelführungskanal (171) bildende Kammer (176) im Hinterabschnitt ausgebildet ist.

12. Fahrradrahmen nach einem der vorhergehenden Ansprüche 4 bis 6, **dadurch gekennzeichnet, dass** am Halteteil (40) Einschraublöchern für eine Bodenplatte ausgebildet sind.

13. Fahrradrahmen nach einem der vorhergehenden Ansprüche, **dadurch gekennzeichnet, dass** das mit einer Ladebuchse im Ladeanschluss verbundene Elektrokabel (60) an einer Unterseite des Schutzblechs (6) für ein Hinterrad verlegt ist.

14. Elektrofahrrad mit einem Fahrradrahmen mit mehreren Rahmenstreben, mit einem von Sitzstreben, Kettenstreben und Ausfallenden für die Hinterachse gebildeten Hinterbau, mit einer Halteeinrichtung für einen Elektromotor, mit wenigstens einer Batterieaufnahme zur Anordnung einer Energieversorgungseinheit für den Elektromotor am Fahrradrahmen, und mit einem Ladeanschluss zum Laden der in der Batterieaufnahme montierten Energieversorgungseinheit, **dadurch gekennzeichnet, dass** der Fahrradrahmen gemäß einem der Ansprüche 1 bis 13 ausgebildet ist und einen am Hinterbau (5) positionierten, für den Benutzer im Stehen von oben zugänglichen Ladeanschluss (30) aufweist.
